# EUROPEAN PATENT APPLICATION

(11) **EP 2 492 920 A2**
(43) Date of publication of application: **29.08.2012**
(21) Application number: 12168843.6
(22) Date of filing: 16.12.2006
(51) Int. Cl.: G21G 1/02

(54) **Systems and methods for radioisotope generation**

(30) Priority: 12.01.2006 US 758419 P; 14.12.2006 US 610574
(62) Divisional of application: 06851254.0
(71) Applicant: DRAXIMAGE General Partnership, Montreal, QC H9H 4J4 (CA)
(72) Inventor: Tartaglia, Daniel, St. Leonard, Québec HIR 3Z6 (CA); Coppola, Carlo, Pointe-Claire, Québec H9R 5Y2 (CA); Teoli, Vince, Montreal, Québec H2N 1W5 (CA); Bournival, Alain Guy, St. Lazarre, Québec H2N 1W5 (CA)
(74) Representative: Holliday, Louise Caroline

(57) **Abstract**

Systems and methods are disclosed for producing customized, predictable, and reproducible supplies of radioisotopes using, for example, a reactor housing that is fabricated from a radioactive shielding material and has both an internal volume and a surface that comprises an entry port and an exit port, a chromatographic column that is positioned within said internal volume such that a first end of said column is in fluid communication with said entry port and a second end of said column is in fluid communication with said exit port, and a changeable filter module that is disposed external to said reactor housing and in fluid communication with said exit port.

## Description

### CROSS REFERENCE TO RELATED APPLICATION

This application claims the benefit of U.S. Provisional Patent Application Serial Number 60/758,419, filed January 12, 2006, and from U.S. Patent Application Serial No. 11/610,574, filed December 14,2006, the respective contents of which are incorporated herein by reference.

### FIELD OF THE INVENTION

This invention relates generally to systems and methods for radioisotope generation. In one aspect, this invention relates to systems and methods for producing customized, predictable and reproducible supplies of radioisotopes for use in nuclear medicine.

### BACKGROUND OF THE INVENTION

Nuclear medicine is a branch of medicine dealing with the use of radioisotopes as radiopharmaceuticals or radioactive tracers in the diagnosis and treatment of disease. Radioisotopes are natural or artificially created isotopes (isotopes being one of two or more atoms having the same atomic number but different mass numbers) of a chemical element that have an unstable nucleus that decays, emitting alpha, beta, or gamma rays until stability is reached.

Radioisotopes, such as the meta stable Technetium-99m (Tc-99m), are used in medical tests as radioactive tracers that medical equipment can detect in the body. Other generator-derived radioisotopes that are used as tracers include yttrium-90, rhenium-188, and *gallium-*68. Tc-99m, in particular, emits readily detectable gamma rays, and it has a half-life of 6 hours. A variety of different radiopharmaceuticals based on Tc-99m are used for imaging and functional studies of the brain, myocardium, thyroid, lungs, liver, gallbladder, kidneys, skeleton, blood and tumors. Schwochau, Klaus. Technetium, Wiley-VCH (2000) (ISBN 3-527-29496-1). Scientists continue to find new uses for radioisotopes, such as Tc-99m. For example, doctors recently used Tc-99m to diagnose precisely the infected lymph nodes in breast cancer patients by injecting Tc-99m into the breast around the tumor to allow them to locate the node quickly and precisely before ever making an incision. *Brookhaven National Laboratory site on the history of the technetium cow.* (http://www.bnl.gov/bnJweb/history/Tc-99m.asp).

A Tc-99m generator, often called a technetium cow, is a device used to extract Tc-99m from decaying molybdenum-99 ("Mo-99"). Mo-99 has a half-life of 66 hours and can be transported over long distances to radiopharmacies and hospitals where its decay product Tc-99m is used for nuclear medicine diagnostic procedures. Removing the Tc-99m from the generator ("milking" the generator) is typically done every 6 hours or, at most, twice daily. Most commercial generators use column chromatography, in which Mo-99 is adsorbed onto alumina. Normal saline solution can be run through a column of immobilized Mo-99 to elute soluble Tc-99m, resulting in a saline solution containing the Tc-99m.

Today, commercial radiopharmacies typically replace their generators on a biweekly basis, since the useful life of a Tc-99m generator is about 6 half lifes or approximately two weeks. Hence, typical clinical nuclear medicine units purchase at least one such generator every two weeks or order several in a staggered fashion. The lead-lined generators are heavy and bulky and represent significant manipulation and toil for personnel to replace and to dispose of spent generators. Large quantities of lead, molded plastic containers, and packing materials are used only once and discarded after two weeks. Shipping costs and waste are real considerations for end-users. Further, conventional generator systems lack flexibility as they are limited to fixed activity denominations per unit sold, resulting in limited predictability and reproducibility. Typical generators also do not provide activity above 19 Ci.

It would be desirable therefore to provide systems and methods for producing customized, predictable and reproducible supplies of radioisotopes, including high activity levels, that do not require weekly replacement, handling and transport of heavy shielding materials associated with conventional generators.

### SUMMARY OF THE INVENTION

In one aspect, the present invention provides systems comprising a reactor housing that is fabricated from a radioactive shielding material and has both an internal volume and a surface that comprises an entry port and an exit port; a chromatographic column that is positioned within said internal volume such that a first end of said column is in fluid communication with said entry port and a second end of said column is in fluid communication with said exit port; and a filter module that is disposed external to said reactor housing and in fluid communication with said exit port.

In another aspect, the present invention provides kits comprising a column, a delivery housing, and a shielded filter module.

The present invention also provides methods comprising the steps of providing a system that comprises: a reactor housing that is fabricated from a radioactive shielding material and has both an internal volume and a surface that comprises an entry port and an exit port; a first chromatographic column that is positioned within said internal volume such that a first end of said column is in fluid communication with said entry port and a second end of said column is in fluid communication with said exit port; and a first filter module that is disposed external to said reactor housing and in fluid communication with said exit port; and positioning a first delivery vessel comprising a solution of at least one radioisotope external to said reactor housing and in fluid communication with said entry port for a time and under conditions effective to elute said chromatographic column with at least a portion of said solution.

In yet another aspect, the present invention provides methods comprising the steps of providing a system that comprises: a reactor housing that is fabricated from a radioactive shielding material and has both an internal volume and a surface that comprises an entry port and an exit port; a first chromatographic column that comprises at least one radioisotope and is positioned within said internal volume such that a first end of said column is in fluid communication with said entry port and a second end of said column is in fluid communication with said exit port; and a filter module that is disposed external to said reactor housing and in fluid communication with said exit port; and removing said first chromatographic column from said reactor housing.

In still yet another aspect, the present invention provides methods comprising the steps of providing a system that comprises: a reactor housing that is fabricated from a radioactive shielding material and has both an internal volume and a surface that comprises an entry port and an exit port; a first chromatographic column that is positioned within said internal volume such that a first end of said column is in fluid communication with said entry port and a second end of said column is in fluid communication with said exit port; and a first filter module that is disposed external to said reactor housing and in fluid communication with said exit port; and removing said first filter module.

The present invention also provides methods comprising the steps of: providing a system that comprises: a reactor housing that is fabricated from a radioactive shielding material and has both an internal volume and a surface that comprises an entry port and an exit port; said internal volume being substantially defined by a first end, a second end, and a wall extending between said first end and said second end; a first chromatographic column that is positioned within said internal volume such that a first end of said column is in fluid communication with said entry port and a second end of said column is in fluid communication with said exit port; and a filter module that is disposed external to said reactor housing and in fluid communication with said exit port; positioning a collection vessel external to said reactor housing and in fluid communication with said exit port via said filter module.

In yet another aspect, the present invention provides methods comprising the steps of: receiving customer information including a target output of a radioisotope; and adding a solution of a parent radioisotope to a delivery vessel in an amount sufficient to produce said target output upon decay of said parent radioisotope.

### BRIEF DESCRIPTION OF THE DRAWINGS

**FIG. 1** is a cutaway side view depicting one generator system according to the invention.

**FIG. 2** is a cutaway side view depicting one shielded filter module according to the invention.

**FIG. 3** is an isometric view of one cart according to the invention.

**FIG. 4** is a cutaway side view of one generator system according to the invention.

**FIG. 5** is a perspective view of a column assembly being inserted into an internal volume of a reactor housing according to the invention.

**FIG. 6** is a perspective view of a radioactive shielding plug being inserted into an opening in a reactor housing according to the invention.

**FIG. 7** is a perspective view of an adapter disk disposed on the surface of a reactor housing according to the invention.
Further aspects of the invention are set out below in the following numbered paragraphs:-
1. A system comprising:
   a reactor housing that is fabricated from a radioactive shielding material and has both an internal volume and a surface that comprises an entry port and an exit port;
   a chromatographic column that is positioned within said internal volume such that a first end of said column is in fluid communication with said entry port and a second end of said column is in fluid communication with said exit port; and
   a filter module that is disposed external to said reactor housing and in fluid communication with said exit port.
2. The system of paragraph 1 wherein said radioactive shielding material is lead, tungsten or depleted uranium.
3. The system of paragraph 1 wherein said reactor housing is substantially rectilinear.
4. The system of paragraph 1 wherein said reactor housing is substantially cylindrical.
5. The system of paragraph 1 wherein said reactor housing includes a first end, a second end, and a wall extending between said first end and said second end.
6. The system of paragraph 5 wherein said entry port and said exit port are positioned at said first end.
7. The system of paragraph 6 further comprising a ridge of radioactive shielding material extending around said entry port at said first end.
8. The system of paragraph 6 further comprising a ridge of radioactive shielding material extending around said exit port at said first end.
9. The system of paragraph 1 wherein said column comprises aluminum oxide particles from about 50 to about 200 µm in size.
10. The system of paragraph 1 wherein said column comprises silica gel particles from about 20 to about 100 µm in size.
11. The system of paragraph 1 wherein said column comprises one or more layers or polypropylene filter membranes, deactivated fused silica wool, one or more glass filter membranes from about 0.2 to about 10 µm in size and made of polyether sulfone, or stainless steel tubing with needle and filter adaptors.
12. The system of paragraph 11 further comprising two acetal plastic plugs with funnel drains.
13. The system of paragraph 1 wherein said filter module comprises a sterile 13 to 25 mm filter membrane from about 0.1 to about 0.22 µm size.
14. The system of paragraph 1 wherein said filter module is attached to said reactor vessel by a tread type adaptor.
15. The system of paragraph 14 wherein a needle is attached to said filter module.
16. The system of paragraph 1 wherein a collection housing is connected to said reactor housing via said filter module.
17. The system of paragraph 1 wherein said column comprises at least one radioisotope.
18. The system of paragraph 17 wherein said at least one radioisotope is Molybdate Mo- 99.
19. The system of paragraph 17 wherein said at least one radioisotope is Pertechnetate Tc99m.
20. The system of paragraph 1 further comprising a delivery vessel that is disposed external to said reactor housing and in fluid communication with said entry port.
21. The system of paragraph 20 wherein said delivery vessel is contained within a delivery housing that is fabricated from radioactive shielding material, such as lead, tungsten or depleted uranium.
22. The system of paragraph 21 wherein said delivery housing has a first end that includes a first coupling, a second end that includes a second coupling, and a walj extending between said first end and said second end.
23. The system of paragraph 22 wherein said first coupling is threaded.
24. The system of paragraph 22 further comprising a transfer tool that comprises a pick-up and release rod having a handle at a first end thereof and a coupling at a second end thereof that is compatible with said first coupling.
25. The system of paragraph 24 wherein said transfer tool is a T-bar handle.
26. The system of paragraph 20 wherein said delivery vessel comprises a solution of at least one radioisotope.
27. The system of paragraph 26 wherein said at least one radioisotope is Molybdate Mo- 99.
28. The system of paragraph 26 wherein said solution is Sodium Molybdate Mo-99.
29. The system of paragraph 26 wherein said delivery vessel comprises about 1 to about 50 Ci.
30. The system of paragraph 20 wherein said delivery vessel comprises Normal Saline [0.9%] solution.
31. The system of paragraph 21 wherein said delivery housing abuts a ridge of material that is external to said reactor housing and extends around said entry port.
32. The system of paragraph 21 wherein said delivery housing is at least partially contained within a ridge of material that is external to said reactor housing and extends around said entry port.
33. The system of paragraph 20 wherein said delivery vessel is at least partially contained within a ridge of material that is external to said reactor housing and extends around said entry port.
34. The system of paragraph 1 further comprising a collection vessel that is disposed external to said reactor housing and in fluid communication with said exit port via said filter module.
35. The system of paragraph 34 wherein said collection vessel is evacuated.
36. The system of paragraph 34 wherein said collection vessel comprises a solution of at least one radioisotope.
37. The system of paragraph '36 wherein said at least one radioisotope is Technetium Tc99m.
38. The system of paragraph 36 wherein said solution is Sodium Pertechnetate Tc-99m.
39. The system of paragraph 1 further comprising an adapter disk disposed on said reactor housing, comprising a ridge of material that extends around said entry port and a ridge of material that extends around said exit port.
40. The system of paragraph 39 further comprising an adapter ridge disposed circumferentially internal to said ridge of material that extends around said entry port.
41. The system of paragraph 40 further comprising a saline vessel that is disposed external to said reactor housing and in fluid communication with said entry port.
42. The system of paragraph 41 wherein said saline vessel comprises Normal Saline
   [0.9%] solution.
43. The system of paragraph 34 wherein said filter module abuts a ridge of radioactive shielding material that is external to said reactor housing and extends around said exit port.
44. The system of paragraph 34 wherein said filter module is at least partially contained within a ridge of radioactive shielding material that is external to said reactor housing and extends around said exit port.
45. The system of paragraph 34 wherein said collection vessel is contained within a collection housing that is fabricated from radioactive shielding material.
46. The system of paragraph 45 wherein said collection housing abuts a ridge of material that is external to said reactor housing and extends around said exit port.
47. The system of paragraph 45 wherein said collection housing is at least partially contained within a ridge of material that is external to said reactor housing and extends around said exit port.
48. The system of paragraph 1 further comprising a cart that includes a plurality of delivery vessels that each independently comprises a reactor vessel.
49. The system of paragraph 1 further comprising a cart that includes a plurality of delivery vessels that each independently comprise a solution of at least one radioisotope and are contained within a delivery housing that is fabricated from radioactive shielding material.
50. The system of paragraph 49 further comprising a conveyor belt for moving said delivery housing.
51. The system of paragraph 49 further comprising a transfer tool for moving said delivery housing.
52. The system of paragraph 49 wherein said at least one radioisotope is Molybdenum-99.
53. The system of paragraph 49 wherein said solution is Sodium Molybdate Mo-99.
54. The system of paragraph 49 wherein said delivery vessels each independently comprise about 1 to about 50 Ci.
55. The system of paragraph 1 further comprising a cart that includes a plurality of evacuated collection vessels.
56. The system of paragraph 1 further comprising a cart that includes a plurality of saline vessels.
57. A kit comprising a column, delivery housing, and a filter module comprising.a radioactive shielding material insert.
58. The kit of paragraph 57 further comprising a transfer tool.
59. The kit of paragraph 57 further comprising a plurality of evacuated collection vessels.
60. The kit of paragraph 57 further comprising a plurality of saline vessels.
61. A method comprising the steps of: providing a system that comprises:
   a reactor housing that is fabricated from a radioactive shielding material and has both an internal volume and a surface that comprises an entry port and an exit port;
   a first chromatographic column that is positioned within said internal volume such that a first end of said column is in fluid communication with said entry port and a second end of said column is in fluid communication with said exit port; and
   a first filter module that is disposed external to said reactor housing and in fluid communication with said exit port; and either:
      positioning a first delivery vessel comprising a solution of at least one radioisotope external to said reactor housing and in fluid communication with said entry port for a time and under conditions effective to elute said chromatographic column with at least a portion of said solution; or
      positioning a collection vessel external to said reactor housing and in fluid
      communication with said exit port via said filter module; or removing said first chromatographic column from said reactor housing; or removing said first filter module.
62. The method of paragraph 61 wherein said first delivery vessel is contained within a delivery housing that is fabricated from radioactive shielding material and has a first end that includes a coupling, a second end that includes a coupling, and a wall extending between said first end and said second end.
63. The method of paragraph 62 wherein positioning said first delivery vessel comprises: mating said coupling at said first end of said delivery housing with a transfer tool comprising a rod having a handle at a first end thereof and a coupling at a second end thereof that is compatible with said coupling at said first end of said delivery housing; and
   lifting said delivery housing.
64. The method of paragraph 63 further comprising mating said coupling at said second end of said first delivery housing with a coupling on said reactor housing that is compatible with said coupling at said second end of said first delivery housing.
65. The method of paragraph 61 further comprising removing said first delivery vessel from said position relative to said reactor housing.
66. The method of paragraph 62 wherein said first delivery vessel is contained within a delivery housing that is fabricated from radioactive shielding material and has a first end that includes a coupling, a second end that includes a coupling, and a wall extending between said first end and said second end.
67. The method of paragraph 66 wherein removing said first delivery vessel comprises:
   mating said coupling at said first end of said first delivery housing with a transfer tool comprising a rod having a handle at a first end thereof and a coupling at a second end thereof that is compatible with said coupling at said first end of said first delivery housing; and
   lifting said delivery housing.
68. The method of paragraph 66 further comprising positioning a second delivery vessel comprising saline external to said reactor housing and in fluid communication with said entry port for a time and under conditions effective to elute said chromatographic column with at least a portion of said saline solution.
69. The method of paragraph 68 further comprising removing said second delivery vessel from said position relative to said reactor housing.
70. The method of paragraph 69 further comprising positioning a subsequent delivery vessel comprising saline external to said reactor housing and in fluid communication with said entry port for a time and under conditions effective to elute said chromatographic column with at least a portion of said saline solution.
71. The method of paragraph 69 further comprising positioning a subsequent delivery vessel comprising a solution of at least one radioisotope external to said reactor housing and in fluid communication with said entry port for a time and under conditions effective to elute said chromatographic column with at least a portion of said solution.
72. The method of paragraph 69 further comprising removing said first chromatographic column from said reactor housing.
73. The method of paragraph 72 further comprising positioning a subsequent chromatographic column in said reactor housing such that a first end of said column is in fluid communication with said entry port and a second end of said column is in fluid communication with said exit port.
74. The method of paragraph 69 further comprising positioning a first collection vessel external to said reactor housing and in fluid communication with said exit port via said filter module.
75. The method of paragraph 74 wherein said collection vessel is contained within a collection housing that is fabricated from radioactive shielding material.
76. The method of paragraph 74 further comprising removing said first collection vessel from said position relative to said reactor housing.
77. The method of paragraph 69 further comprising positioning a subsequent collection vessel external to said reactor housing and in fluid communication with said exit port via said filter module.
78. The method of paragraph 61 further comprising removing said first filter module.
79. The method of paragraph 78 further comprising positioning a subsequent filter module external to said reactor housing and in fluid communication with said exit port.
80. The method of paragraph 61 comprising the steps of:
   providing said system; and
   positioning a first delivery vessel comprising a solution of at least one radioisotope external to said reactor housing and in fluid communication with said entry port for a time and under conditions effective to elute said chromatographic column with at least a portion of said solution
81. The method of paragraph 61 comprising the steps of:
   providing said system; and removing said first chromatographic column from said reactor housing.
82. The method of paragraph 61 further comprising positioning a subsequent chromatographic column in said reactor housing such that a first end of said column is in fluid communication with said entry port and a second end of said column is in fluid communication with said exit port.
83. The method of paragraph 61 comprising the steps of:
   providing said system; and
   removing said first filter module.
84. The method of paragraph 61 further comprising positioning a subsequent filter module external to said reactor housing and in fluid communication with said exit port.
85. The method of paragraph 61 comprising the steps of:
   providing said system; and
   positioning a collection vessel external to said reactor housing and in fluid communication with said exit port via said filter module.
86. A method comprising the steps of;
   receiving customer information including a target output of a radioisotope; and adding a solution of a parent radioisotope to a delivery vessel in an amount sufficient to produce said target output upon decay of said parent radioisotope.
87. The method of paragraph 86 wherein said radioisotope is Technetium-99m.
88. The method of paragraph 86 wherein said parent radioisotope is Molybdenum-99.
89. The method of paragraph 86 further comprising shipping said delivery vessel to said customer.

### DETAILED DESCRIPTION OF ILLUSTRATIVE EMBODIMENTS

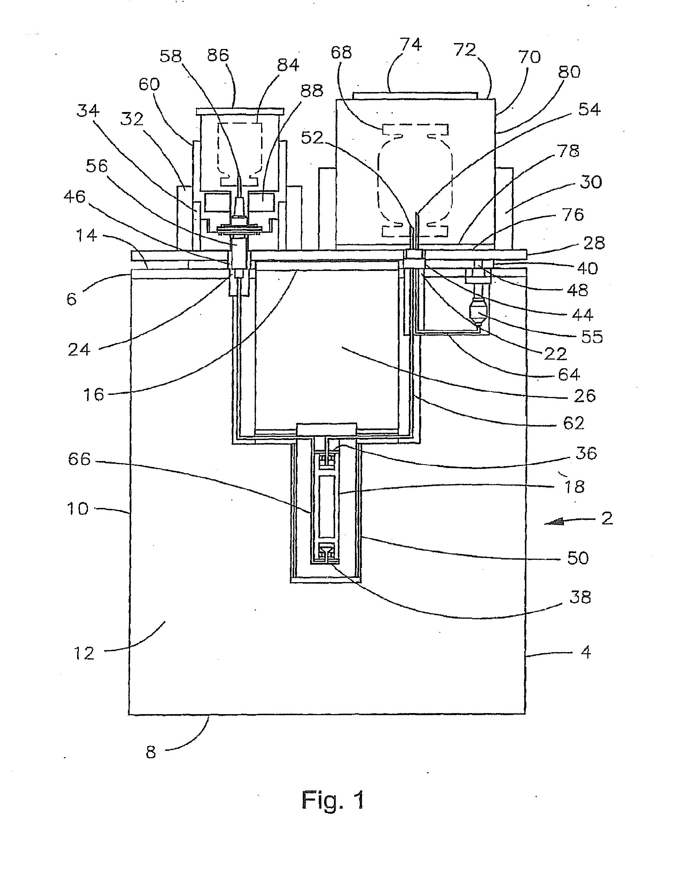

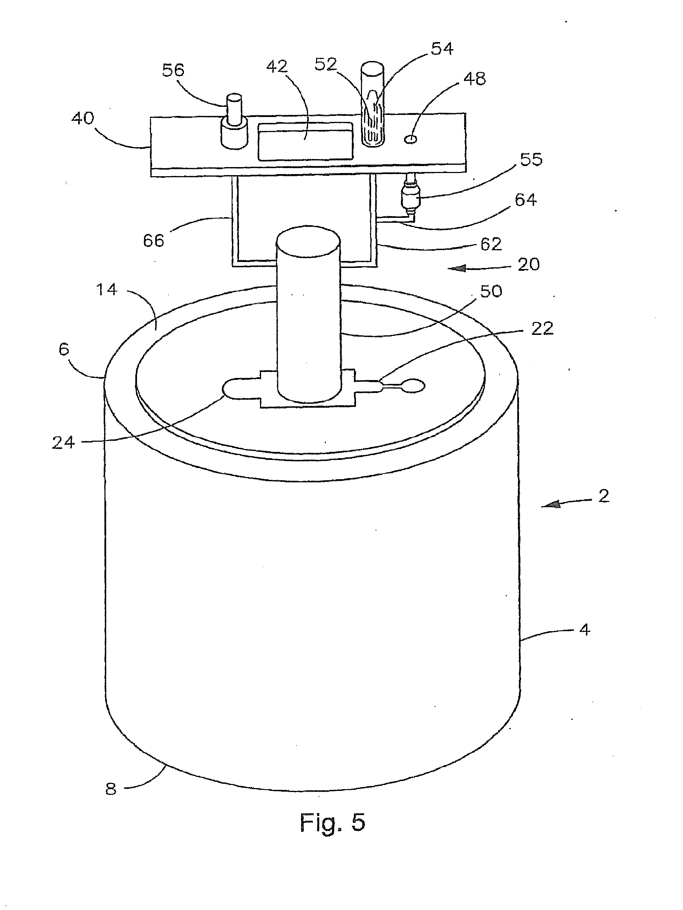

With reference to the drawings, **FIG. 1** shows one type of generator system **2** according to the invention. The generator system may include a reactor housing **4** fabricated from a radioactive shielding material such as lead, tungsten, or depleted uranium. The reactor housing **4** maybe substantially cylindrical, as shown in **FIG. 1****.** In another embodiment, the reactor housing may be substantially rectilinear. The reactor housing **4** may include a first end **6,** a second end **8,** and a wall **10** extending between said first end **6** and said second end **8.** The reactor housing **4** may have both an internal volume **12** and a surface **14** that comprises an opening **16** for inserting a column **18** (said column may be included in a column assembly **20,** shown in more detail in **FIG. 5****),** an entry port **22,** and an exit port **24.** The opening **16,** entry port **22** and exit port **24** may be positioned at said first end **6** of said housing **4.** A radioactive shielding plug **26** may be disposed in said opening **16** in said surface **14** above said column **18.** The radioactive shielding plug **26** may be fabricated from a radioactive shield material such as lead, tungsten, or depleted uranium. The reactor housing **4** may have an adapter disk **28** disposed on the surface **14** of said reactor housing **4** that comprises a ridge of guide **material 30** that may extend around said entry port **22** and a ridge of guide material **32** that may extend around said exit port **24.** Preferably, the adapter disk **28** and ridges of guide material **30** and **32** are plastic. A ridge of radioactive shielding material **34** may extend around said exit port **24.**

A chromatographic column **18** may be positioned within said internal volume **12** such that a first end **36** of said column **18** is in fluid communication with said entry port **22** and a second end **38** of said column **18** is in fluid communication with said exit port **24.** In one embodiment, the column **18** may be included in a column assembly **20.** The column assembly **20,** in turn, may comprise a column adaptor plate **40** having a-radioactive shielding plug opening **42,** an adaptor plate entry port **44** and an adaptor plate exit port **46** corresponding to said entry port **22** and said exit port **24** of said reactor housing, respectively, an adaptor plate vent port **48** (which may include a vent filter), and a column housing **50,** preferably fabricated from radioactive shielding material such as lead, tungsten, or depleted uranium. The column assembly **20** may comprise an entry needle **52** and a vent needle **54** disposed in said adaptor plate entry port **44,** and an exit connection **56,** adapted for fluid communication with a changeable sterile needle **58** of a filter module **60.** An entry pipe **62** may extend from said entry needle **52** to said first end **36** of said column **18.** A vent pipe **64** may extend from said vent needle **54** to a safety valve **55** (said safety valve **55** protecting said vent filter by preventing back pressure from being released onto said vent filter) and said safety valve **55** may extend to said vent port **48.** An exit pipe 66 may extend from said second end **38** of said column **18** to said exit connection **50.** The column **18** may be inserted into said internal volume **12** of said reactor housing **4** through said opening **16** in said surface **1.4** of said reactor housing **4.** Alternatively, said column assembly **20** maybe positioned such that said column **18** is disposed in said internal volume **12** of said reactor housing **4.** The column **18** may comprise at least one radioisotope, including but not limited to Mo-99, Tc-99m, Y-90, Re-188, or Ga-68. In preferred embodiments, the column **18** is fabricated from glass. The column **18** may contain alumina in the form of aluminum oxide, Al₂O₃ (mp of about 2,000°C and specific gravity of about 4.0). Preferably, the column **18** is a glass column that contains aluminum oxide. The aluminum oxide powder preferably has a particle size of from about 20 to about 200 µm. In addition to the aluminum oxide powder, the column **18** may also include silica gel having a particle size of from about 20 to about 100 µm, The column **18** may also comprise one or more layers or polypropylene filter membranes, deactivated fused silica wool, and/or one or more glass filter membranes, The filter membranes preferably measure from about 0.2 to about 10 µm and may comprise polyether sulfone, Acetal plastic plugs with funnel drains, or stainless steel tubing with needle and filter adaptors. Particularly preferred filter membranes are those fabricated from polyether sulfone at a size of 0.2 µm.

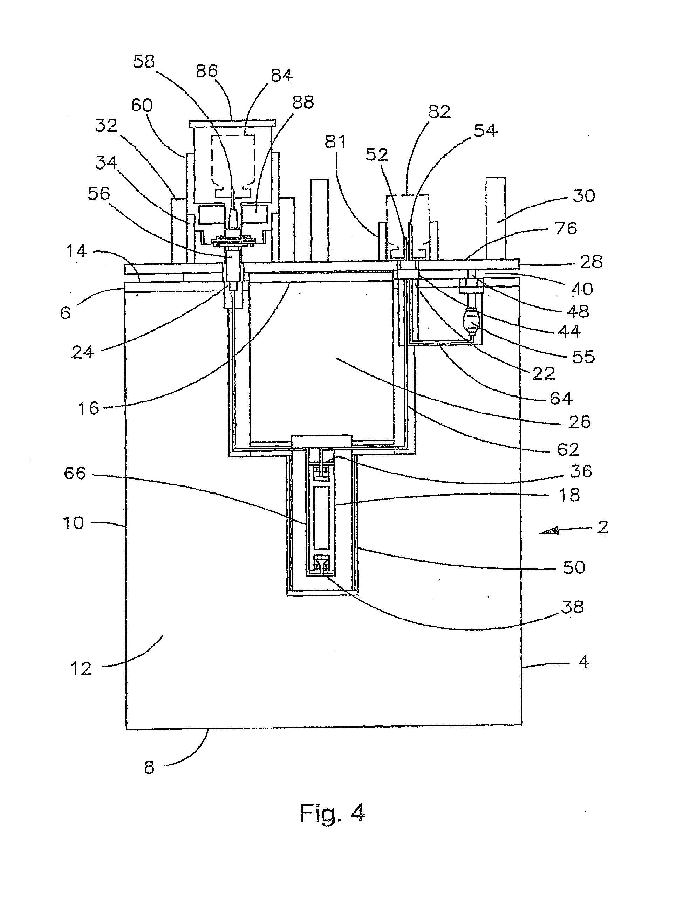

A delivery vessel **68** may be disposed external to said reactor housing **4** and in fluid communication with said entry port **22.** The delivery vessel **68** may be a 3 to 20 ml (preferably 10 ml) borosilicate glass vessel. The delivery vessel **68** may be contained within a delivery housing **70** that is fabricated from radioactive shielding material such as lead, tungsten, or depleted uranium. The delivery housing **70** preferably is fabricated from radioactive shielding material and has a first end **72** that includes a first coupling **74,** a second end **76** that includes a second coupling **78,** and a wall **80** extending between said first end **72** and said second end **76.** The first coupling **74** and second coupling **78** may be threaded or may form a lure lock. In certain embodiments, delivery vessel **68** comprises a solution of at least one radioisotope, including but not limited Mo-99 or Tc-99m in the form of sodium molybdate Mo-99 or sodium pertechnetate Tc-99m, respectively. In such embodiments, delivery vessel **68** preferably comprises from about 1 to about 50 Ci (1 curie (Ci) is 37 gigabecquerels (GBq) exactly and 1 Bq = 2.7027×10⁻¹¹ Ci). In other embodiments, delivery vessel **68** comprises Normal Saline [0.9%] solution. The delivery housing **70** may abut a ridge of guide material **30** that may be external to said reactor housing **4** and may extend around said entry port **22.** The delivery housing **70** may be at least partially contained within a ridge of guide material **30** that may be external to said reactor housing and may extend around said entry port **22.** In certain embodiments, an adapter guide ridge **81** may be disposed on said adapter disk **28** circumferentially internal to said ridge of guide material **30.** A saline vessel **82** may be disposed external to said reactor housing 4, and in fluid communication with said entry port **22** and may abut said adapter guide ridge **81 (****FIG. 4****)** that extends around said entry port **22.** The saline vessel **82** may comprise Normal Saline [0.9%] solution.

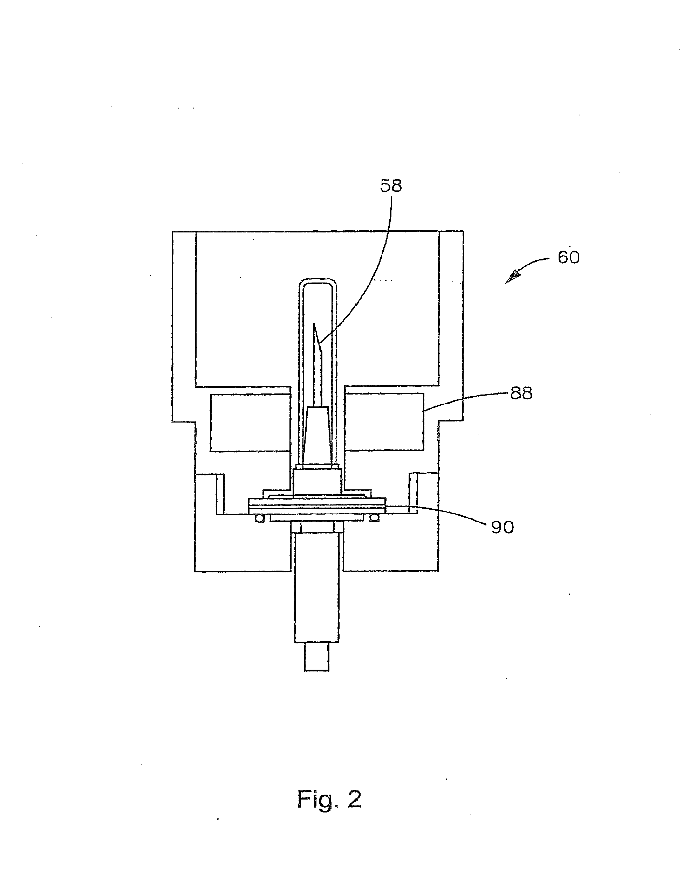

The generator system **2** may comprise a collection vessel **84** that is disposed external to said reactor housing **4** and in fluid communication with said exit port **24** via a filter module **60,** discussed below with reference to **FIG. 2****.** The collection vessel **84** may be evacuated, and ultimately is used to collect a solution of at least one radioisotope. The collection vessel **84** may be a 10 to 30 ml borosilicate glass vessel. Preferably, the collection vessel **84** is a 20 to 30 ml sterile, evacuated, borosilicate glass vessel. As shown in **FIG. 1****,** collection vessel **84** is contained within a collection housing **86** that is fabricated from radioactive shielding material.

As shown in **FIG. 2****,** a filter module **60** may be disposed external to the reactor housing **4** and may be in fluid communication with said exit port **24.** The filter module **60** may include a radioactive shielding material insert **88** that is positioned between said collection vessel **84** and said reactor housing 4. The filter module **60** preferably holds a sterile 13 to 25 mm filter membrane **90** of 0.1 to 0.22 µm size, preferably of 0.2 µm size. The filter module **60** may be attached via a tread type adaptor to join the reactor to a sterile evacuated collection vessel **84.** A changeable sterile needle **58** may be attached to the sterile filter **90** for daily sterile eluting procedures. The filter module **60** may abut a ridge of radioactive shielding material **34** and/or may abut a ridge of guide material **32** that is external to said reactor housing 4 and extends around said exit port **24.** The filter module **60** may be at least partially contained within said ridge of radioactive shielding material **34** and/or said ridge of guide material **32.** The radioactive shielding material may be lead, tungsten, or depleted uranium.

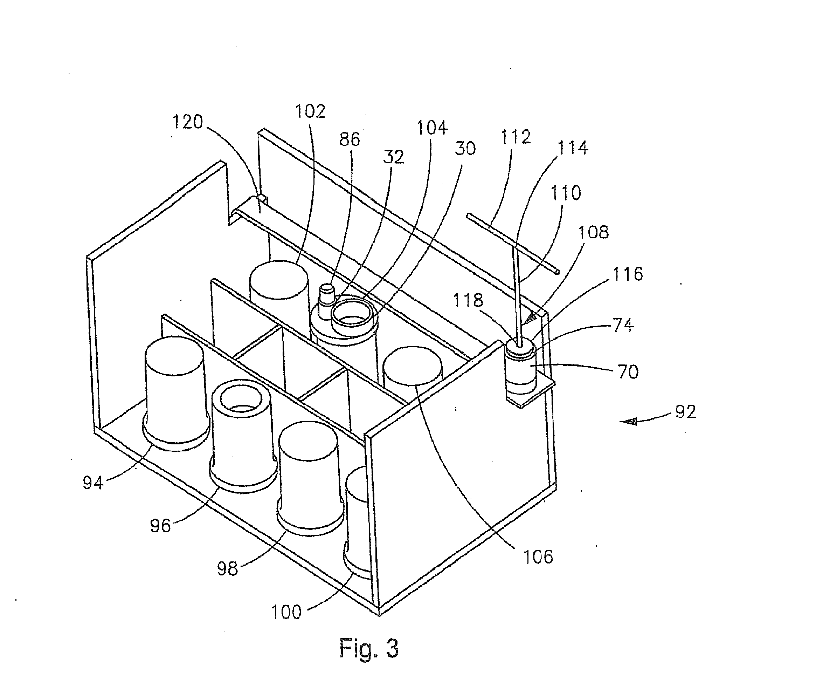

The generator system may include a cart **92,** as shown in **FIG. 3****.** The cart **92** preferably is fabricated from steel and lead. The frame is preferably fabricated from steel. The walls of cart **92** are preferably lead plates or lead brick. The cart **92** may hold a plurality of reactor housings **94, 96, 98, 100, 102, 104,** and **106** that may be fabricated from radioactive shielding material The cart **92** may also comprise a plurality of delivery vessels **68** and/or a plurality of evacuated collection vessels **84** and/or a plurality of saline vessels **82.** The cart **92** may include a transfer tool **108** that comprises a pick-up and release rod **110** having a handle **112** at a first end **114** thereof and a coupling **116** at a second end **118** thereof that is compatible with the first coupling **74** of said delivery housing **70.** The transfer tool **108** preferably is a universal
T-bar handle. The cart **92** may also include a conveyor belt **120,** or other motion enhancing device, to assist a user with moving a delivery housing **70** proximate to a reactor housing (*e.g.,* **94, 96, 98, 100, 102, 104** and **106).**

Methods of radioisotope generation according to the invention may be described with reference to **FIGS. 1** and **2****.** In certain embodiments, such methods involve positioning a first delivery vessel **68** comprising a solution of at least one radioisotope external to said reactor housing **4** and in fluid communication with said entry port **22** for a time and under conditions effective to elute said chromatographic column **18** with at least a portion of said solution. The first delivery vessel **68** maybe positioned by mating said first coupling **74** at said first end **72** of said delivery housing **70** with transfer tool **108** and lifting the delivery housing **70.** The coupling **78** at said second end **76** of said first delivery housing **70** may be mated with a coupling on said reactor housing **4** that is compatible with said coupling **78** at said second end **76** of said first delivery housing **70.** The delivery vessel **68** may be removed from said position relative to said reactor housing **4** by lifting said delivery housing **70.** Subsequent delivery vessels comprising saline solution or a solution of at least one radioisotope may be used to elute said column **18** with at least a portion of said solutions. A collection vessel **84** may be positioned external to said reactor housing **4** and in fluid communication with said exit port **22** via said filter module **60.** The column **18,** column assembly **20,** filter module **60,** filter membrane **90,** sterile needle **58,** delivery vessel **68,** collection vessel **84** and/or saline vessel **82** may be removed from said reactor housing **10** and may be replaced by subsequent columns, column assemblies, filter modules, filter membranes, sterile needles, delivery vessels, collection vessels and/or saline vessels, respectively, as appropriate.

In certain embodiments, methods of radioisotope generation according to the invention involve the receipt of customer information including a target output of a radioisotope, the addition of a solution of a parent radioisotope to a delivery vessel in an amount sufficient to produce said target output upon decay of said parent radioisotope, and the shipment of said delivery vessel to said customer. The customer's generator system, in turn, may be loaded and re-loaded with varying volumes of said parent radioisotope effective to collect specific target concentrations of the desired radioisotope. The generator systems may be re-loaded more than 2 times, more preferably more than 4 times, and most preferably more than 6 times. Preferably, the customer information received includes a target output of Tc-99m from 1 to 50 Ci, and the solution added to the delivery vessel includes Mo-99 in an amount sufficient to produce said target output upon decay of said Mo-99.

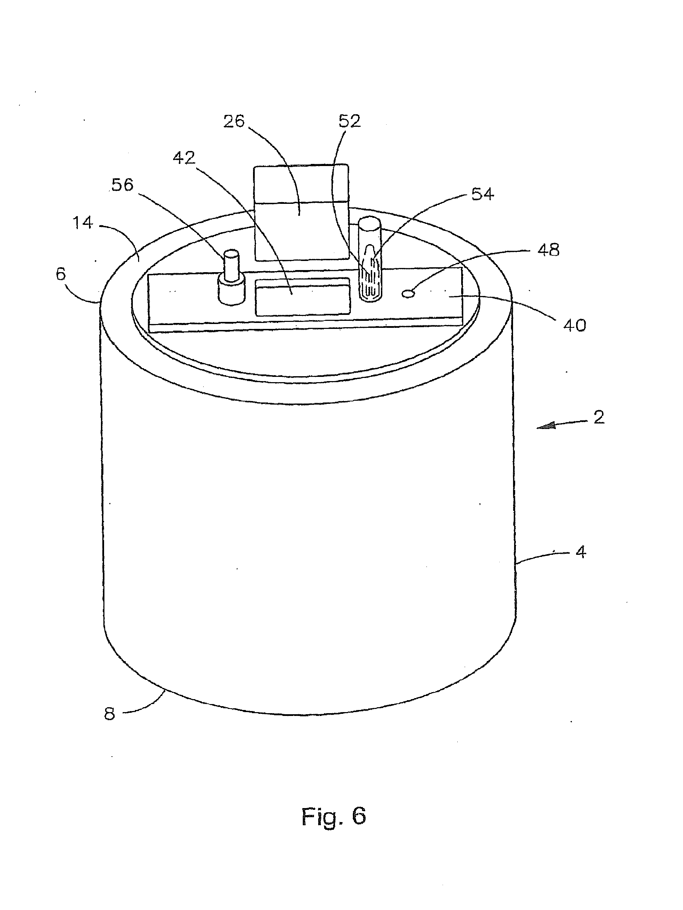

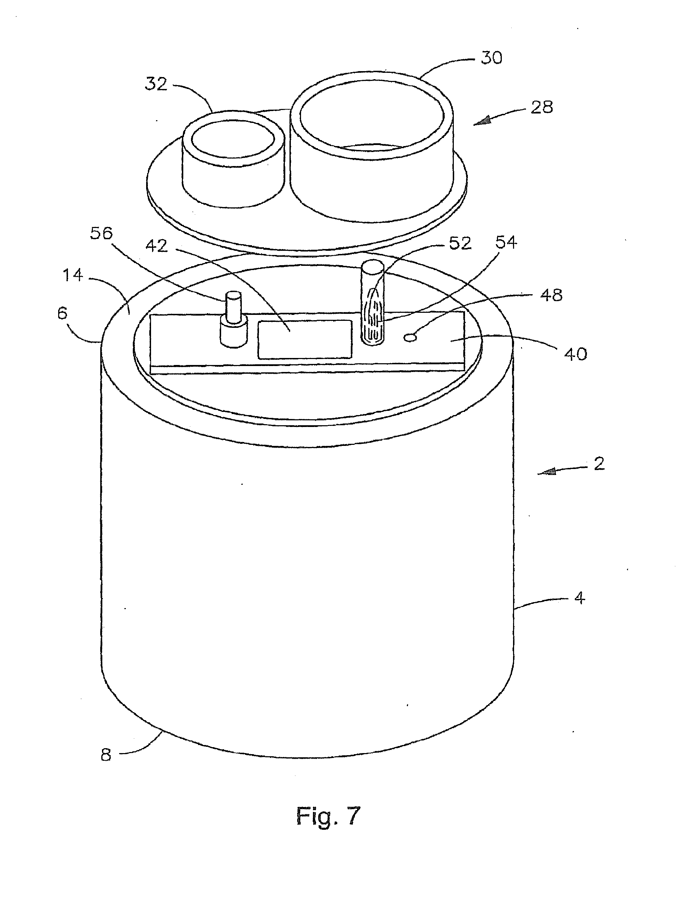

A kit for radioisotope generation according to the invention is also contemplated and may be described with reference to **FIGs. 1-3****.** The kit may include a column **18** or a column assembly **20,** a delivery housing **70** containing a delivery vessel **68** comprising at least one radioisotope, a filter module **60** comprising a radioactive shielding material insert **88,** a transfer tool **108**, a plurality of evacuated collection vessels **84** and a plurality of saline vessels **82.** The kit can be used to replenish existing reactor housings **4** and thereby avoids shipment and disposal thereof.
In addition, exemplary steps for radioisotope generation according to the invention may be described with reference to **FIGs. 1-7****.** As shown in **FIG. 5****,** a column assembly **20** may be inserted into an internal volume **12** of a reactor housing **4** (said reactor housing having an entry port **22** and an exit port **24),** through an **opening 16** in the surface **14** of the reactor, housing 4. Then, as shown in **FIG. 6****,** the opening **16** above the column **18** may be plugged with a radioactive shielding plug **26.** Then, as shown in **FIG. 7****,** an adapter disk **28,** comprising a ridge of guide material **30** extending around the entry port **22** and a ridge of guide material **32** extending around the exit port **24,** may be disposed on the surface **14** of the reactor housing **4.** A filter module **60** may then be disposed external to the reactor housing **4** in fluid communication with the exit port **24.** A delivery **vessel 68** containing a radioisotope, contained in a delivery housing **70,** may then be disposed external to the reactor housing **4** and in fluid communication with the entry port **22.** An evacuated collection vessel **84,** contained with a collection housing 86, may then be disposed external to the reactor housing **4** in fluid communication with the exit port **24** via the filter module **60.** After waiting a suitable amount of time (*e.g.*, more than about three minutes), the collection vessel **84** and then the delivery vessel **68** may be removed. An adapter guide ridge **81** may then be disposed on the surface of the adapter disk 28 such that it extends around the entry port **22.** A saline vessel **82** may then be disposed external to the reactor **housing 4** and in fluid communication with the entry port **22.** An evacuated collection vessel 84, contained within a collection housing **86,** may then be disposed external to the reactor housing 4 and in fluid communication with the exit port **24** via the filter module 60. After again waiting a suitable amount of time, said collection housing **86** may be removed. An evacuated collection vessel **84,** contained within a collection housing **86,** may then'be disposed external to the reactor housing **4** and in fluid communication with the exit port **24** via the filter module **60.** The aforementioned exemplary steps may be repeated with subsequent delivery vessels, columns, filter modules and collection vessels as may be appropriate.

Thus, there have been described systems and methods for producing customized, predictable and reproducible supplies of radioisotopes that do not require weekly replacement, handling and transport of heavy shielding materials associated with conventional generators. It will be appreciated that numerous modifications may be made to the example embodiments described herein, and that such modifications do not depart from the scope of the invention as defined by the following claims.

## Claims

1. A system comprising:
a reactor housing that is fabricated from a radioactive shielding material and has both an internal volume and a surface that comprises an entry port and an exit port;
a chromatographic column that bears at least one radioisotope and is positioned within said internal volume;
a filter module that is disposed external to said reactor housing and in fluid communication with said column;
an adapter disk disposed on said reactor housing, comprising a ridge of material that extended around said entry port and a ridge of material that extends around said exit port, and,
an adapter ridge disposed circumferentially internal to said ridge of material that extends around said entry port.

2. A system according to claim 1, wherein said reactor house includes a first end, a second end and a wall extending between said first end and said second end.

3. A system according to claim 1, wherein said column comprises aluminum oxide particles from about 50 to 200 µm in size.

4. A system according to claim 1, wherein said column comprises silica gel particles from about 20 to 100 µm in size.

5. A system according to claim 1, wherein a collection housing is connected to said reactor housing via said filter module.

6. A system according to claim 1, including a delivery vessel that is disposed external to said reactor housing in fluid communication with said column.

7. A system according to claim 8, wherein said delivery vessel comprises a solution of about 1 to 50 Ci of at least one radioisotope.

8. A system according to claim 1, including a collection vessel that is disposed external to said reactor housing and in fluid communication with said column via said filter module.

9. A system according to claim 1, wherein said filter module abuts a ridge of radioactive shielding material that is external to said reactor housing and extends around said exit port.

10. A system according to claim 1, wherein said filter module is at least partially contained within a ridge of radioactive shielding material that is external to said reactor housing and extends around said exit port.

11. A system according to claim 1, wherein said collection vessel is contained within a collection housing that is fabricated from radioactive shielding material.

12. A system according to claim 1, including a cart that includes a plurality of delivery vessels that each independently comprises a reactor vessel.

13. A system according to claim 1, including a cart that includes a plurality of delivery vessels that each independently comprise a solution of at least one radioisotope and are contained within a delivery housing that is fabricated from radioactive shielding material.

14. A system according to claim 13, wherein said delivery vessels each independently comprise about 1 to about 50 Ci.

15. A system according to claim 1, wherein said column is configures to be reloaded with radioisotope solution at least one.

16. A system according to claim 1, including a column assembly comprising a further chromatographic column for replacing said chromatographic column after said at least some of said radioisotope has been eluted therefrom.
